# EUROPÄISCHE PATENTSCHRIFT

(11) **EP 2 673 526 B1**
(45) Veröffentlichungstag und Bekanntmachung des Hinweises auf die Patenterteilung: **01.07.2015**
(21) Anmeldenummer: 12711746.3
(22) Anmeldetag: 06.02.2012
(51) Int. Cl.: F16D 65/02, B60B 27/00, B60B 27/02

(54) **RADLAGERUNG FÜR EIN FAHRZEUGRAD SOWIE RADNABE FÜR DIE BEFESTIGUNG EINES FAHRZEUGRADES**
WHEEL BEARING FOR A VEHICLE WHEEL, AND WHEEL HUB FOR FASTENING A VEHICLE WHEEL
SYSTÈME DE ROULEMENT DE ROUE POUR ROUE DE VÉHICULE ET MOYEU DE ROUE POUR LA FIXATION D'UNE ROUE DE VÉHICULE

(30) Priorität: 10.02.2011 DE 102011000626
(43) Veröffentlichungstag der Anmeldung: 18.12.2013
(73) Patentinhaber: BPW Bergische Achsen KG, 51674 Wiehl (DE)
(72) Erfinder: ROSSENBACH, Bernhard, 51674 Wiehl (DE); SCHWARZ, Michael, 51469 Bergisch-Gladbach (DE); NEUMANN, Arthur, 51597 Morsbach (DE)
(74) Vertreter: Bungartz Christophersen Partnerschaft mbB Patentanwälte
(86) Internationale Anmeldenummer: PCT/DE2012/100025
(87) Internationale Veröffentlichungsnummer: WO 2012/107033

(56) Entgegenhaltungen:
- EP-A2- 0 849 487
- DE-A1- 4 338 593
- DE-A1- 19 704 353
- DE-A1-102005 055 720
- US-A1- 2006 042 887

## Beschreibung

Die Erfindung betrifft eine Radlagerung für ein Fahrzeugrad mit einer über mindestens ein Wälzlager drehbar auf einem Achsschenkel einer Fahrzeugachse angeordneten Radnabe. Die Erfindung betrifft ferner eine solche Radnabe.

In Radlagerungen scheibengebremster Fahrzeugachsen kommen hauptsächlich entweder Bremsscheiben mit axial verlängerndem Bremsscheibentopf, oder aber topflose Bremsscheiben zum Einsatz. Beispiele für beide Bauarten sind z. B. in der DE 100 27 942 C2 wiedergegeben. Bei der Bremsscheibe mit Bremsscheibentopf erstreckt sich zwischen dem Reibring der Bremsscheibe und dem Befestigungsflansch ein mehr oder weniger zylindrischer Verbindungsabschnitt, der das Gewicht derartiger Bremsscheiben deutlich erhöht. Hingegen zeichnet sich eine topflose Bremsscheibe, wie sie ebenfalls in der DE 100 27 942 C2 anhand einer zweiten Bauart beschrieben ist, durch ein relativ geringes Gewicht aus. Bei dieser zweiten Bauart führt der notwendige Abstand zwischen der Befestigung des Fahrzeugrades einerseits und der Befestigung der Bremsscheibe andererseits zu einer Gestaltung der Radnabe, bei der diese mit einem ersten, weiter fahrzeuginnen angeordneten Befestigungsabschnitt für die Bremsscheibe, und mit einem zweiten, weiter fahrzeugaußen angeordneten Befestigungsabschnitt für die Befestigung des Fahrzeugrades versehen ist. Nachteilig bei der zweiten Bauart der DE 100 27 942 C2 ist die mangelnde Servicefreundlichkeit im Falle von Wartungsarbeiten an der Bremse. Denn die kompakt gestaltete Bremsscheibe ist durch ein Verbundgussverfahren auf dem fahrzeuginneren Ende der Radnabe befestigt, und daher nicht zerstörungsfrei von der Radnabe trennbar. Bei Verschleiß der Bremsscheibe muss zugleich die gesamte Radnabe ausgetauscht werden.

Eine wesentlich wartungs- und auch montagefreundlichere Radlagerung ist aus der DE 102 46 939 A1 bekannt. Auch hier ist die Radnabe mit einem ersten Befestigungsabschnitt für die kompakt gestaltete Bremsscheibe, und mit einem hierzu beabstandeten zweiten Befestigungsabschnitt für das Fahrzeugrad bzw. die Radfelge versehen. Allerdings ist die Befestigung der Bremsscheibe an der Nabe derart, dass sich die Radnabe nicht vom Achsschenkel abziehen lässt, ohne in jedem Fall auch die Bremsscheibe mitzunehmen. Denn es kann je nach Bauart der Scheibenbremse von Nachteil sein, wenn zur Demontage der Einheit von Radnabe und Bremsscheibe zunächst die gesamte Scheibenbremse demontiert, zumindest jedoch zur Seite hin entfernt werden muss. Auch die Lösung nach der DE 102 46 939 A1 ist daher bei Wartungsarbeiten an der Scheibenbremse und insbesondere bei verschlissener Bremsscheibe nicht montagefreundlich.

Aus der US 4,049,085 ist eine Radlagerung bekannt, bei der die kompakt gestaltete Bremsscheibe von fahrzeuginnen her an einer Flanschfläche der Radnabe über Schraubbolzen lösbar befestigt ist. Im Rahmen von Wartungsarbeiten an der Scheibenbremse ist es jedoch schwierig, an diese Schraubbolzen zu gelangen, da diese nur von der Nabenaußenseite her mit entsprechenden Werkzeugen zugänglich sind. Um überhaupt an die Schraubbolzen zu gelangen, ist auf jeden Fall zunächst das Fahrzeugrad zu entfernen. Aber auch danach ist das Losschrauben von der Nabenaußenseite her schwierig und vor allem zeitaufwändig.

Der Erfindung liegt die **Aufgabe** zugrunde, eine Radlagerung zum Einsatz bei einer scheibengebremsten Fahrzeugachse zu schaffen, mit der sich Wartungsarbeiten an der Scheibenbremse montagefreundlich durchführen lassen, und die die Verwendung einer kompakten und damit gewichtsarmen Bremsscheibe ermöglicht.

Zur **Lösung** dieser Aufgabe vorgeschlagen wird eine Radlagerung für ein Fahrzeugrad, mit einer über mindestens ein Wälzlager drehbar auf einem Achsschenkel angeordneten Radnabe mit einem Nabengrundkörper, der an seiner Innenseite das Wälzlager aufnimmt und zwischen dessen Außenseite und dem Felgenhorn des Fahrzeugrades sich ein durch die Radnabe und/oder durch den Felgensteg des Fahrzeugrades gebildeter Verbindungsbereich erstreckt, wobei die Radnabe
a) in einem weiter fahrzeuginnen angeordneten, ersten Befestigungsabschnitt mit einer Flanschfläche versehen ist, gegen die die Bremsscheibe einer Scheibenbremse lösbar befestigt ist,
b) im Abstand zu dem ersten Befestigungsabschnitt in einem weiter fahrzeugaußen angeordneten, zweiten Befestigungsabschnitt mit dem Fahrzeugrad verbunden ist,
wobei die Bremsscheibe mittels mehrerer über den Umfang der Flanschfläche verteilt angeordneter Befestigungsmittel von fahrzeuginnen her an der Flanschfläche befestigt ist, und wobei sich in dem Verbindungsbereich in axialer Fluchtung zu dem jeweiligen Befestigungsmittel jeweils eine Montageöffnung befindet.

Ferner wird zur Lösung der genannten Aufgabe eine Radnabe für die Befestigung eines Fahrzeugrades und einer Bremsscheibe einer Scheibenbremse vorgeschlagen, mit einem an seiner Innenseite mit einer Wälzlageraufnahme versehenen Nabengrundkörper, wobei die Radnabe
a) in einem weiter fahrzeuginnen angeordneten, ersten Befestigungsabschnitt mit einer Flanschfläche versehen ist, gegen die die Bremsscheibe lösbar befestigbar ist,
b) im Abstand zu dem ersten Befestigungsabschnitt in einem weiter fahrzeugaußen angeordneten, zweiten Befestigungsabschnitt mit einem Nabenflansch zur Befestigung des Fahrzeugrades versehen ist,
wobei die Bremsscheibe mittels mehrerer über den Umfang der Flanschfläche verteilt angeordneter Befestigungsmittel von fahrzeuginnen her an der Flanschfläche befestigbar ist, und wobei sich im Nabenflansch in axialer Fluchtung zu dem jeweiligen Befestigungsmittel jeweils eine Montageöffnung befindet.

Eine solche Radlagerung und eine solche Radnabe zeichnet sich dadurch aus, dass sich Wartungsarbeiten an der Scheibenbremse montagefreundlich durchführen lassen, und eine kompakte und damit gewichtsarme Bremsscheibe zum Einsatz kommen kann.

Die Bremsscheibe ist nicht, wie häufig im Stand der Technik, von fahrzeugaußen her, sondern sie ist von fahrzeuginnen her an der Radnabe befestigt, wozu mehrere über den Umfang der Flanschfläche verteilt angeordnete Befestigungsmittel, z.B. Verschraubungen, dienen. Um möglichst montagefreundlich an diese Befestigungsmittel heran zu gelangen, befindet sich in dem Verbindungsbereich, der sich zwischen der Außenseite des Nabengrundkörpers und dem Felgenhorn des Fahrzeugrades erstreckt, in axialer Fluchtung zu dem jeweiligen Befestigungsmittel jeweils eine Öffnung. Diese ist im normalen Betriebszustand der Radlagerung offen. Im Rahmen von Wartungsarbeiten an der Scheibenbremse dient sie jedoch dazu, ein Löse- bzw. Befestigungswerkzeug und evtl. ein Schraubelement hindurchzuführen, so dass dieses in im Wesentlichen axialer Fluchtung an den weiter fahrzeuginnen angeordneten Befestigungsabschnitt für die Bremsscheibe gelangt. In vorteilhafter Weise unterstützt die Montageöffnung wegen ihrer im Wesentlichen fluchtenden Anordnung zugleich die Handhabung des betreffenden Löse- oder Befestigungswerkzeuges, und führt dieses direkt in Richtung zu dem jeweiligen Befestigungsmittel, welches die Bremsscheibe mit der Radnabe verbindet.

Bei diesen Befestigungsmitteln handelt es sich vorzugsweise um Schraubverbindungen, welche die Bremsscheibe von fahrzeuginnen her gegen die Radnabe heranziehen wobei über den Umfang verteilt mehrere derartiger Schraubverbindungen angeordnet sind, z. B. fünf Schraubverbindungen.

Mit einer Ausgestaltung wird vorgeschlagen, dass die Bremsscheibe an dem Nabengrundkörper mittenzentriert ist und hierzu mit einer zylindrischen Innenkontur wenigstens bereichsweise auf einer entsprechenden zylindrischen Außenkontur der Radnabe sitzt. Bei dieser Ausgestaltung übernimmt die Mittenzentrierung, da sie mit zylindrischen Zentrierflächen arbeitet, keinerlei Übertragung des Bremsmomentes. Die Übertragung des Bremsmomentes erfolgt vielmehr an anderen Orten über mehrere Formschlusselemente. Diese befinden sich jeweils dort, wo über den Umfang der Radnabe verteilt die Befestigungsmittel angeordnet sind.

Um den Materialeinsatz und damit das Gewicht der Bremsscheibe gering zu halten, ist diese vorzugsweise als Scheibe mit einem Reibring aus zwei beabstandeten Reibflächen, und einem sich nach innen zu dem Nabengrundkörper hin erstreckenden Befestigungsbund ausgebildet, wobei die axiale Dicke des Befestigungsbundes nicht größer ist, als die Dicke des Reibrings.

Die Schraubverbindungen, in deren Orten auch jeweils der bremsmomentübertragende Formschluss zwischen Bremsscheibe und Radnabe erfolgt, verfügen jeweils, über ein zentrales Schraubelement mit einem Schaftdurchmesser, der geringer als der jeweilige Lochdurchmesser an der Flanschfläche ist. Bei Mittenzentrierung der Bremsscheibe an der Radnabe wird auf diese Weise erreicht, dass das zentrale Schraubelement kontaktfrei das jeweilige Loch durchdringt.

Mit dem Ziel der Führung des Löse- bzw. Befestigungswerkzeuges bei der Montage bzw. Demontage der Bremsscheibe wird mit einer weiteren Ausgestaltung vorgeschlagen, dass der Nabengrundkörper auf seiner Außenseite zwischen den beiden Befestigungsabschnitten mit jeweils in axialer Verlängerung zu den Befestigungsmitteln sich erstreckenden Führungsstrukturen für das Löse-/Befestigungswerkzeug versehen ist. Diese Führungsstrukturen sind vorzugsweise als Mulden oder Rinnen gestaltet, die nach radial außen offen sind.

Mit einer weiteren Ausgestaltung wird vorgeschlagen, dass Bestandteil der Schraubverbindung bremsscheibenseitig mindestens eine mit einem Innengewinde für das zentrale Schraubelement versehene Gewindehülse ist. Die Gewindehülse kann ein eigenständiges Bauteil sein, oder sie kann in die Bremsscheibe eingegossen sein.

Mit einer weiteren Ausgestaltung wird vorgeschlagen, dass sich die Flanschfläche an einem Nabenflansch der Radnabe befindet, und dass die Bremsscheibe reib- und formschlüssig an dem Nabenflansch befestigt ist, wobei der Formschluss mittelbar durch zwischen der Bremsscheibe und dem Nabenflansch angeordnete Formschlusselemente erreicht wird. Diese Formschlusselemente können eigenständige Bauteile sein, oder sie können in die Bremsscheibe eingegossen sein.

Zur Erzielung eines Formschlusses in Richtung der Bremsmomentübertragung können die Formschlusselemente in radial sich erstreckende Nuten eingreifen, mit denen der Nabenflansch versehen ist.

Mit einer weiteren Ausgestaltung wird ein wärmeisolierendes Bauteil zwischen der Flanschfläche und der Bremsscheibe vorgeschlagen. Das wärmeisolierende Bauteil kann sich über den Innenrand der Bremsscheibe hinaus nach radial innen erstrecken, und in diesem Bereich den Polring eines Raddrehungssensors (z. B. ABS-Sensors) bilden.

Mit einer weiteren Ausgestaltung wird vorgeschlagen, dass die Montageöffnungen, durch die das Löse-/Befestigungswerkzeug hindurchführbar ist, auf einem gemeinsamen ersten Teilkreis angeordnet sind, und dass auf einem zweiten, zu dem ersten Teilkreis koaxialen Teilkreis Löcher oder Gewindebohrungen zur Befestigung des Fahrzeugrades an dem Nabenflansch der Radnabe angeordnet sind. Vorzugsweise ist die Zahl der der Radbefestigung dienenden Löcher oder Gewindebohrungen größer, als die Zahl der Montageöffnungen.

Des Weiteren wird vorgeschlagen, dass der Radfelgensteg die Möntageöffnungen freilässt und nicht überdeckt. Auf diese Weise kann durch die im Fahrbetrieb offenen Montageöffnungen Kühlluft hindurchtreten, und der so entstehende Kühlluftstrom zur Kühlung der Radnabe und der Bremsscheibe beitragen.

Weitere Vorteile und Einzelheiten ergeben sich aus der nachfolgenden Beschreibung von Ausführungsbeispielen, wobei auf die Zeichnungen Bezug genommen wird. Darin zeigen:
- Fig. 1: in einer vereinfacht dargestellten ersten Ausführungsform einen Schnitt durch eine Radlagerung für ein Fahrzeugrad, deren Radnabe eine Befestigung für ein Fahrzeugrad und eine weitere Befestigung für eine Bremsscheibe einer Scheibenbremse bietet;
- Fig. 2: die Radlagerung nach Fig. 1, wobei Radnabe und Bremsscheibe voneinander getrennt sind;
- Fig. 3: eine Stirnansicht auf ein Segment der Radnabe entsprechend der Schnittebene III - III in Fig. 2;
- Fig. 4: eine Stirnansicht auf ein Segment des inneren Bremsscheibenrandes entsprechend der Schnittebene IV - IV in Fig. 2;
- Fig. 5: in einer vereinfacht dargestellten zweiten Ausführungsform die Radnabe und die Bremsscheibe in getrenntem Zustand;
- Fig. 6: in einer dritten Ausführungsform die Radnabe und die Bremsscheibe in zusammengebautem Zustand;
- Fig. 7: die Radnabe und die Bremsscheibe in getrenntem Zustand mit einem zusätzlichen, die Montage vereinfachenden Hilfswerkzeug;
- Fig. 8: in einer Teildarstellung einer vierten Ausführungsform den Befestigungsabschnitt zwischen Radnabe und Bremsscheibe und
- Fig. 9: eine detaillierte, weitere Ausführungsform der Radlagerung in einem Halbschnitt.

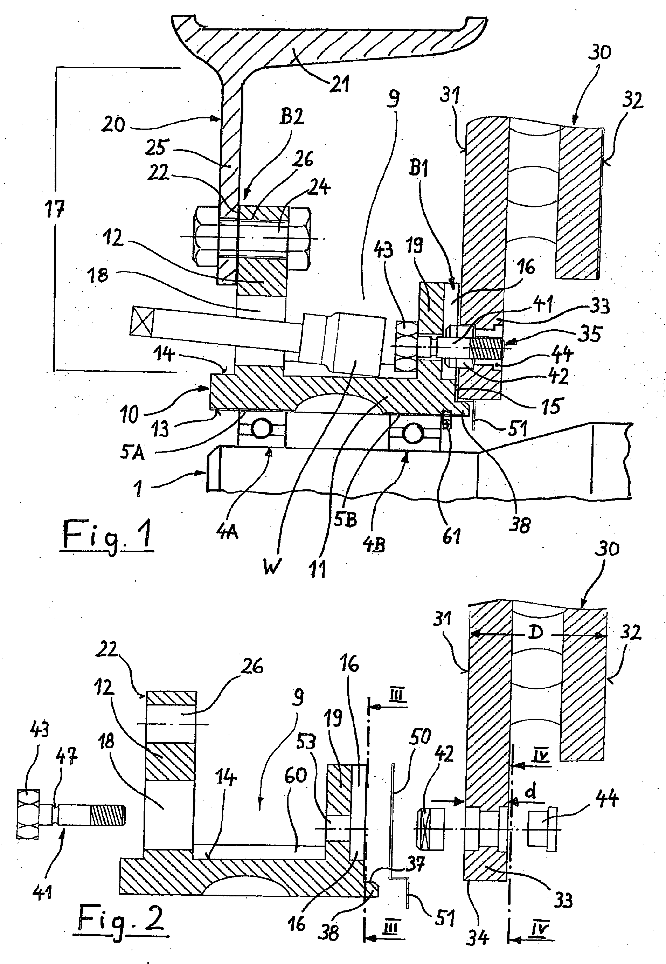

Bei der in Fign. 1 bis 4 wiedergegebenen Radlagerung ist auf einem drehfest angeordneten Achsschenkel 1 der Fahrzeugachse, hier einer Nutzfahrzeug-Anhängerachse, über eine ein- oder mehrteilige Wälzlagerung 4A, 4B eine Radnabe 10 drehbar gelagert. Ein langgestreckter Nabengrundkörper 11 der Radnabe 10 ist an seiner Innenseite 13 mit Wälzlageraufnahmen 5A, 5B für die Wälzlager 4A, 4B versehen.

Außer aus dem Nabengrundkörper 11 besteht die Radnabe 10 noch aus einem als radiale Erweiterung gestalteten äußeren Nabenflansch 12, und einem als radiale Erweiterung gestalteten inneren, d.h. mehr fahrzeuginnen angeordneten Nabenflansch 19.

An dem inneren Nabenflansch 19 befindet sich ein erster Befestigungsabschnitt B1, in dem eine Bremsscheibe 30 einer Schwimmsattel-Scheibenbremse an der Radnabe 10 befestigt ist. An dem äußeren Nabenflansch 12 befindet sich ein zweiter Befestigungsabschnitt B2, in dem ein Fahrzeugrad 20 an der Radnabe 10 befestigt ist. Die Befestigungsabschnitte B1, B2 sind in Nabenlängsrichtung soweit beabstandet, dass sich zwischen ihnen ein ringförmiger Freiraum 9 befindet, der nach innen zu dem Nabengrundkörper 11 hin durch die Außenseite 14 des Nabengrundkörpers begrenzt ist.

An einer nach fahrzeugaußen, also in Fig. 1 links, weisenden Flanschfläche 22 des Nabenflansches 12 ist das Fahrzeugrad 20 in dem Befestigungsabschnitt B2 mittels Schraubbolzen 24 befestigt, welche den Nabenflansch 12 und einen Felgensteg 25 des Fahrzeugrades 20 durchdringen, und so das Fahrzeugrad 20 an der Radnabe festlegen. In Fig. 1 bezeichnet ist ferner jener Verbindungsbereich 17, der sich zwischen der Außenseite 14 des Nabengrundkörpers 11 und dem Felgenhorn 21 des Fahrzeugrades 20 radial erstreckt. Der Verbindungsbereich 17 wird teils durch den Nabenflansch 12 der Radnabe 10, und teils durch den flächigen d. h. scheibenförmigen Teil des Fahrzeugrades 20 gebildet, also den Felgensteg 25.

In dem mehr fahrzeuginnen, also in Fig. 1 weiter rechts angeordneten Befestigungsabschnitt B1 ist der Nabenflansch 19 mit einer nach fahrzeuginnen weisenden Flanschfläche 15 versehen, gegen die die Bremsscheibe 30 lösbar befestigt ist. Die Befestigung der Bremsscheibe 30 gegenüber der Flanschfläche 15 erfolgt mittels einer Mehrzahl an Befestigungsmitteln 35.

Die Befestigungsmittel 35 sind hier jeweils als lösbare Verschraubungen gestaltet, wobei über den Umfang des Nabenflansches 19 bzw. der Flanschfläche 15 mehrere dieser Verschraubungen 35 in jeweils gleichen Umfangsabständen angeordnet sind. Bestandteil jeder Verschraubung 35 ist zumindest ein zentrales Schraubelement 41, welches mit seinem Außengewinde in ein Innengewinde einer Gewindehülse 44 eingreift.

Das Festziehen und auch Lösen der jeweils als Verschraubung ausgebildeten Befestigungsmittel 35 erfolgt nicht von der Fahrzeuginnenseite, sondern von der Fahrzeugaußenseite, d. h. in Fig. 1 von links, her. Dazu ist in den Freiraum 9 zwischen den beiden Befestigungsabschnitten B1 und B2 ein entsprechendes Löse- / Befestigungswerkzeug W einführbar, um so an die Werkzeugflächen 43 des zentralen Schraubelements 41 zu gelangen. Für ein Höchstmaß an Montagefreundlichkeit befindet sich, um mit dem Werkzeug W an die Verschraubung 35 zu gelangen, in dem aus dem Nabenflansch 12 und dem Felgensteg 25 bestehenden Verbindungsbereich 17 in axialer Ausrichtung zu der jeweiligen Verschraubung 35 jeweils eine Montageöffnung 18. Diese ist groß genug zum Hindurchführen des Werkzeuges W und ggf. auch zum Hindurchführen des Schraubelements 41.

Die Montageöffnung 18 kann als kreisförmige Durchgangsbohrung ausgebildet sein, jedoch auch jede beliebige andere Querschnittsgestalt aufweisen, solange sie genügend Platz zum Hindurchführen des Werkzeugs W und ggfs. des Schraubelements 41 bietet. Insbesondere ist es möglich, die Montageöffnung 18 bewusst zu gestalten und so z. B. dem gewünschten Design der Radnabe oder dem gewünschten Design des Fahrzeugrades anzupassen.

Bei den hier beschriebenen Ausführungsbeispielen befindet sich die Montageöffnung 18 jeweils in dem äußeren Nabenflansch 12. Ebenso lässt sich die Montageöffnung 18, sofern im Wesentlichen die Fluchtung zu der jeweiligen Verschraubung 35 sichergestellt ist, im Felgensteg 25 des Fahrzeugrades 20 anordnen. Diese Lösung wird sich dann realisieren lassen, wenn der äußere Nabenflansch 12 einen nur geringen Umfang aufweist, der nicht oder nicht wesentlich größer als der Umfang der Außenseite 14 des Nabengrundkörpers 11 ist. Denkbar ist auch eine Montageöffnung 18, die sich durch den Felgensteg 25 des Rades und zugleich durch den Nabenflansch 12 erstreckt.

Im Fahrbetrieb sind die Montageöffnungen 18 offen. Sie ermöglichen dann den Zutritt oder die Abförderung von Kühlluft im Bereich der Bremsscheibe und der Nabe. Insbesondere können die Montageöffnungen 18 so gestaltet sein, dass sie nach Art eines Schaufelrades Luft in den Freiraum 9 hinein befördern oder aus diesem abführen.

Gemäß Fig. 2 ist die Bremsscheibe 30 zu ihrer koaxialen Zentrierung auf der Nabe mit einem radial nach innen vorstehenden Befestigungsbund 33 versehen, an dessen Innenrand sich eine zylindrische Zentrierfläche 34 befindet. Diese liegt bei montierter Bremsscheibe an einer korrespondierenden zylindrischen Zentrierfläche 37 der Radnabe 10 an.

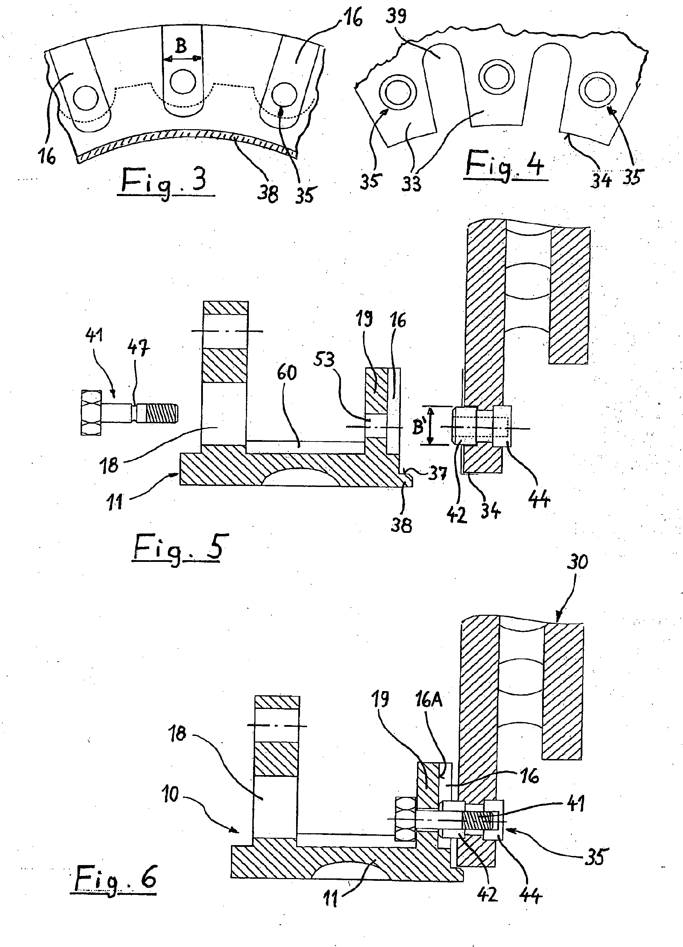

Bei den Ausführungsformen nach den Figuren 1 - 7 befindet sich die radnabenseitige Zentrierfläche 37 an einem nach fahrzeuginnen vorstehenden Bund 38 an dem Nabengrundkörper 11. Die Zentrierung erfolgt auf diese Weise im Bereich des geringsten Durchmessers der Bremsscheibe und der Radnabe, womit der Vorteil einer reduzierten Wärmeübertragung zwischen Bremsscheibe und Radnabe verbunden ist. Zur Reduzierung der Wärmeübertragung trägt gemäß Fig. 4 ferner bei, dass die Bremsscheibe 30 im Bereich ihres radial nach innen vorstehenden Befestigungsbundes 33 mit vom Innenrand 34 ausgehenden Ausnehmungen 39 versehen ist. Die Anzahl der Ausnehmungen 39 ist gleich der Anzahl der Verschraubungen 35, wobei sich in Umfangsrichtung jeweils eine Verschraubung 35 mit einer Ausnehmung 39 abwechselt, wie Fig. 4 ebenfalls erkennen lässt.

Über die Zentrierflächen 34, 37 lässt sich kein nennenswertes Bremsmoment übertragen. Vielmehr erfolgt die Übertragung der Bremsmomente durch zwischen der Bremsscheibe 30 und dem Nabenflansch 19 angeordnete Formschlusselemente 42. Diese sind bei den Ausführungsformen Fign. 1 -. 7 als im inneren Befestigungsbund 33 der Bremsscheibe verankerte Buchsen 42 gestaltet, wobei diese Buchsen zapfenartig in radial sich erstreckende Nuten 16 des Nabenflansches 19 eingreifen, und so in Drehrichtung formschlüssig verriegeln. Gemäß Fig. 3 befinden sich die Nuten 16 in der nach fahrzeuginnen weisenden Flanschfläche 15, und sie erstrecken sich radial mit im Wesentlichen gleichbleibender Breite B. Diese Breite B ist geringfügig größer, als die entsprechende Breite B' der hier als Buchsen gestalteten Formschlusselemente 42.

Bei der Ausführungsform nach den Figuren 1 - 4 ist zwischen der Bremsscheibe 30 und der Radnabe 10 ein zusätzliches, flaches Bauteil 50 ausgestanztem Metallblech angeordnet. Das Bauteil 50 ist wärmeisolierend und erschwert daher die Wärmeübertragung von der Bremsscheibe auf die Radnabe. Ferner ist das Bauteil 50 über den Innenrand 34 der Bremsscheibe 30 hinaus nach radial innen verlängert, und bildet in diesem Bereich den Polring 51 eines Raddrehungssensors, also z. B. eines ABS-Sensors.

Das zentrale Schraubelement 41 jeder Verschraubung 35 stützt sich mit seinem Schraubenkopf, an dem sich auch die Werkzeugflächen 43 befinden, von fahrzeugaußen her gegen den Nabenflansch 19 ab. Zugleich greift das am anderen Ende des Schraubelements 41 ausgebildete Außengewinde in das Innengewinde der von fahrzeuginnen her in dem Befestigungsbund 33 sitzenden Gewindehülse 44. Durch die Zugkraft dieser Verschraubung wird das buchsenförmige Formschlusselement 42 in der Bremsscheibe verankert, wobei das Formschlusselement 42 so weit aus der Bremsscheibe axial vorsteht, dass zumindest ein Längsabschnitt des Formschlusselements 42, wie bereits beschrieben, formschlüssig in die Nut 16 hineinragt. Die Kontaktstelle des Formschlusselements 42 kann flächig oder linienförmig sein. Das Element 42 kann dazu rund oder auch viereckig konturiert sein.

Die Ausführungsform nach Fig. 5 unterscheidet sich von der Ausführungsform nach den Figuren 1 - 4 dadurch, dass die Gewindehülse 44 nach fahrzeuginnen nach Art einer Kappe verschlossen ist. Dies verringert die Gefahr eines Eindringens von Schmutz in den Bereich der Befestigungsmittel 35.

Bei der Ausführungsform nach Fig. 6 ist ebenfalls die Gewindehülse 44 nach fahrzeuginnen hin verschlossen. Zusätzlich unterscheidet sich diese Ausführungsform hinsichtlich des axialen Anliegens der Bremsscheibe 30 an der Nabe 10. Denn bei dieser Ausführungsform stützt sich nicht eine Fläche der Bremsscheibe gegen eine Fläche der Radnabe oder des Bauteils 50 ab, vielmehr stützt sich nur die Stirnfläche des in der Bremsscheibe verankerten Formschlusselements 42 gegen die Basis 16A der Nut 16 ab, und bildet so indirekt die Anlage der Bremsscheibe an der Radnabe. Wegen der geringen Fläche dieser axialen Anlage wird die Wärmeübertragung zwischen Bremsscheibe und Radnabe sehr wirksam reduziert.

Das Schraubelement 41 ist berührungsfrei gegenüber der umgebenden Bohrung 53 in dem Nabenflansch 19 und steht somit einer wärmebedingten radialen Ausdehnung den Bremsscheibe nicht entgegen. Das Schraubelement 41 kann mit einer Söllbruchstelle 47 versehen sein. Denn stellt sich im Rahmen von Wartungsarbeiten an der Scheibenbremse heraus, dass die Bremsscheibe 30 nicht mehr zu verwenden ist, lässt sich das Schraubelement 41 durch überzogenes Anzugsmoment brechen, womit die Verbindung zwischen Bremsscheibe und Radnabe sofort und unter Vermeidung eines Losschraubens gelöst ist. Dies gilt auch für den Fall, dass die Schraubelemente 41 in den Gewindehülsen festkorrodiert sind.

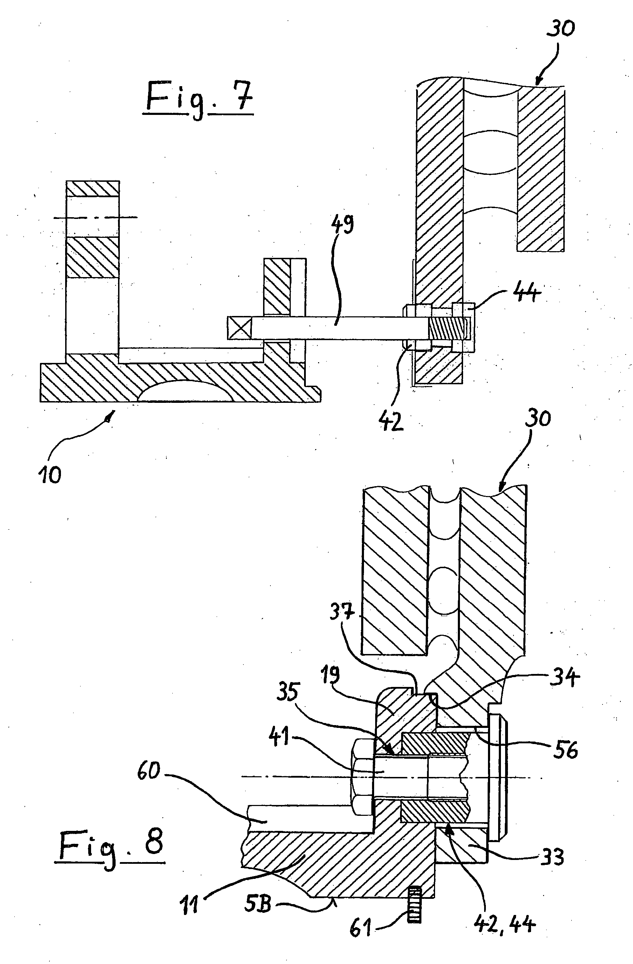

Bei der Ausführungsform nach Fig. 7 wird als Montagehilfe ein langer Bolzen 49 verwendet, welcher anstelle des Schraubelements 41 in die Gewindehülse 44 eingeschraubt wird. Durch die Schaftlänge des Bolzens 49 erleichtert dieser das Ansetzen der Radnabe 10 an die in der Scheibenbremse mittels eines Zentrierwerkzeuges positionierte und anschließend mechanisch blockierte Bremsscheibe 30. Sobald die Radnabe 10 korrekt an der Bremsscheibe 30 anliegt, wird der provisorische Bolzen 49 entfernt, und durch die Schraube 41 ersetzt.

Bei der Ausführungsform nach Fig. 8 befinden sich die Zentrierflächen 34, 37 von Bremsscheibe und Radnabe weiter radial außen an dem fahrzeuginneren Nabenflansch 19.

Unterschiedlich ist bei der Ausführungsform nach Fig. 8 auch der Formschluss zwischen Bremsscheibe 30 und Radnabe 10. Jedes Formschlusselement 42 in Gestalt einer an seinem fahrzeuginneren Ende geschlossenen Gewindebuchse 44 sitzt hierbei, gesichert durch das zentrale Schraubelement 41, in dem Nabenflansch 19. Jedes Formschlusselement 42 durchragt auf einem Teil seiner Länge eine Bohrung 56, mit der die Bremsscheibe 30 im Bereich ihres Befestigungsbundes 33 versehen ist. Zur Vermeidung von Doppelpassungen kann der Durchmesser der Bohrung 56 etwas größer sein, als der zylindrische Außendurchmesser des Formschlusselements 42.

Allen Ausführungsformen gemeinsam ist die kompakte Bauart der Bremsscheibe 30. Diese ist als Scheibe mit einem Reibring aus zwei beabstandeten Reibflächen 31, 32, und dem sich nach innen zu dem Nabengrundkörper 11 hin erstreckenden Befestigungsbund 33 ausgebildet. In jedem Fall ist die axiale Erstreckung d des Befestigungsbundes 33 nicht größer, als die Dicke D des Reibrings (Fig. 2).

Weiterhin gemeinsam ist allen Ausführungsformen, dass der Nabengrundkörper 11 auf seiner Außenseite 14 zwischen den beiden Befestigungsabschnitten B1, B2 mit Führungsstrukturen 60 für das Löse- / Befestigungswerkzeug W versehen ist. Die Führungsstrukturen 60 sind zur Nabenaußenseite hin offene Rinnen, deren Kontur im Wesentlichen der Kontur des verwendeten Werkzeuges W entspricht. Bei axialer Bewegung des Werkzeugs W zu der Verschraubung 35 hin wird das Werkzeug entlang dieser Führungsstrukturen 60 so geführt, dass das Werkzeug sicher die Werkzeugflächen 43 findet.

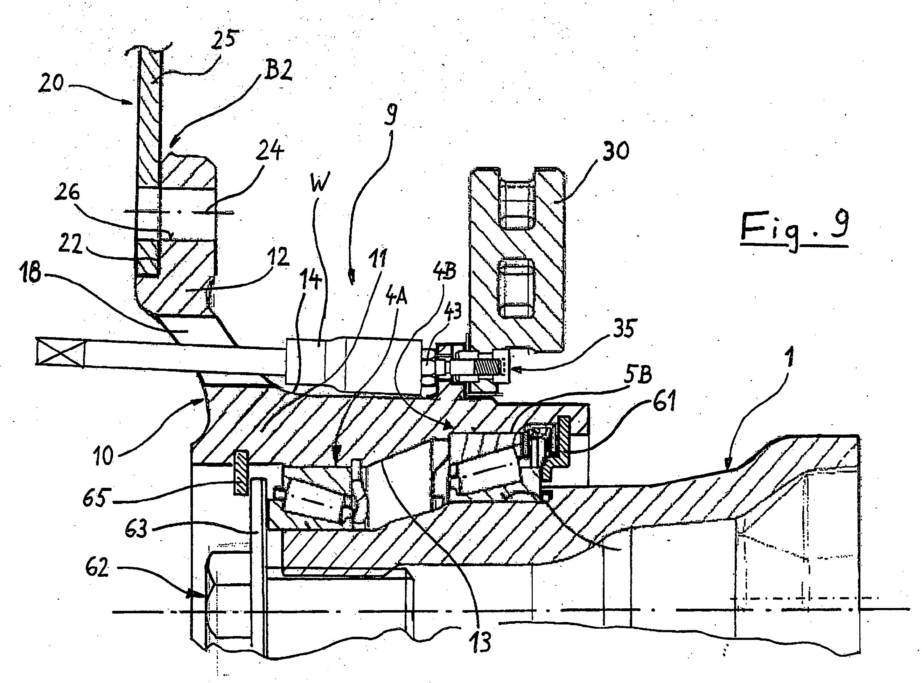

Unter Bezugnahme auf Fig. 9 lässt sich die Demontage der Radlagerung im Rahmen von Wartungsarbeiten an der Scheibenbremse montagefreundlich durchführen, indem zunächst in einem ersten Schritt durch Aktivierung der Scheibenbremse die Bremsscheibe 30 zwischen den Bremsbacken der Scheibenbremse blockiert wird. Sodann werden, wie oben beschrieben, die Befestigungsmittel 35 gelöst und so die axiale Verbindung zwischen Bremsscheibe 30 und Radnabe 10 getrennt. Wegen der Montageöffnung 18 jeweils in Fluchtung zu den dahinter angeordneten Befestigungsmitteln 35 ist es für diese Arbeiten nicht erforderlich, das Fahrzeugrad 20 von der Radnabe 10 abzunehmen.

Sodann lässt sich die komplette Radnabe 10 einschließlich des Fahrzeugrades 20 und auch einschließlich der Wälzlager 4A, 4B von dem Achsschenkel 1 abziehen, während die Bremsscheibe 30 in der Bremse bleibt. Das gemeinsame Abziehen wird ermöglicht, indem an der Innenseite 13 des Nabengrundkörpers 11 hinter dem fahrzeuginneren Wälzlager 4B die Radnabe 10 mit radial nach innen ragenden Vorsprüngen 61 versehen ist. Als Vorsprung 61 dient hier ein innen am Nabengrundkörper 11 befestigter Ring, der das innere Wälzlager 4B nahezu komplett hintergreift. Durch diesen Hintergriff wird beim Abziehen der Radnabe 10 zugleich auch die komplette Wälzlagerung mit von dem Achsschenkel 1 abgezogen. Dies lässt sich besonders einfach bewerkstelligen, wenn die mit dem Achsschenkel 1 verschraubte Zentralverschraubung 62 der Fahrzeugachse mit einem radial erweiterten Bund 63 versehen ist, der einen weiteren, an der Innenseite 13 des Nabengrundkörpers angeordneten Vorsprung 65 hintergreift. Auch der Vorsprung 65 der Nabe ist hier als Ring, nämlich als in einer Nut an der Innenseite der Nabe sitzender Sicherungsring, gestaltet. Beim Losschrauben der Zentralverschraubung 62 nimmt diese über den Bund 63 und den Vorsprung 65 die Radnabe mit, sodass die Abziehkräfte nicht durch reines Ziehen aufgebracht werden müssen, sondern durch Losschrauben.

### Bezugszeichenliste

- 1: Achsschenkel
- 4A: Wälzlager
- 4B: Wälzlager
- 5A: Wälzlageraufnahme
- 5B: Wälzlageraufnahme
- 9: Freiraum

- 10: Radnabe
- 11: Nabengrundkörper
- 12: Nabenflansch
- 13: Innenseite
- 14: Außenseite
- 15: Flanschfläche
- 16: Nut
- 16A: Basis
- 17: Verbindungsbereich
- 18: Montageöffnung
- 19: Nabenflansch

- 20: Fahrzeugrad
- 21: Felgenhorn
- 22: Flanschfläche
- 24: Schraubbolzen
- 25: Felgensteg
- 26: Loch

- 30: Bremsscheibe
- 31: Reibfläche
- 32: Reibfläche
- 33: Befestigungsbund
- 34: Innenrand, Zentrierfläche
- 35: Verschraubung, Befestigungsmittel
- 37: Zentrierfläche
- 38: Bund
- 39: Ausnehmung

- 41: zentrales Schraubelement
- 42: Formschlusselement
- 43: Werkzeugfläche
- 44: Gewindehülse
- 47: Sollbruchstelle
- 49: Bolzen

- 50: Bauteil
- 51: Polring
- 53: Bohrung
- 56: Bohrung

- 60: Führungsstruktur
- 61: Vorsprung an der Nabe
- 62: Zentralverschraubung
- 63: Bund
- 65: Vorsprung

- B: Breite
- B': Breite
- B1: erster Befestigungsabschnitt
- B2: zweiter Befestigungsabschnitt
- d: Dicke
- D: Dicke
- W: Löse- / Befestigungswerkzeug

## Patentansprüche

1. Radnabe für die Befestigung eines Fahrzeugrades und einer Bremsscheibe einer Scheibenbremse, mit einem an seiner Innenseite (13) mit einer Wäzlageraufnahme (5A, 5B) versehenen Nabengrundkörper (11), wobei die Radnabe (10)
a) in einem weiter fahrzeuginnen angeordneten, ersten Befestigungsabschnitt (B1) mit einer Flanschfläche (15) versehen ist, gegen die die Bremsscheibe lösbar befestigbar ist,
b) im Abstand zu dem ersten Befestigungsabschnitt (B1) in einem axial weiter fahrzeugaußen angeordneten, zweiten Befestigungsabschnitt (B2) mit einem Nabenflansch (12) zur Befestigung des Fahrzeugrades versehen ist,
wobei die Bremsscheibe mittels mehrerer über den Umfang der Flanschfläche (15) verteilt angeordneter Befestigungsmittel (35) von fahrzeuginnen her an der Flänschfläche (15) befestigbar ist, **dadurch gekennzeichnet, dass** sich im Nabenflansch (12) in axialer Fluchtung zu dem jeweiligen Befestigungsmittel (35) jeweils eine Montageöffnung (18) befindet.

2. Radnabe nach Anspruch 1, **dadurch gekennzeichnet, dass** die Flanschfläche (15) an einem Nabenflansch (19) ausgebildet ist, welcher der Bremsscheibe zugewandt mit radial sich erstreckenden Nuten (16) versehen ist.

3. Radnabe nach Anspruch 1, **dadurch gekennzeichnet, dass** der Nabengrundkörper (11) auf seiner Außenseite (14) zwischen den beiden Befestigungsabschnitten (B2, B1) mit jeweils in axialer Fluchtung zu den Befestigungsmitteln (35) sich erstreckenden Führungsstrukturen (60) für ein Löse-/Befestigungswerkzeug versehen ist.

4. Radnabe nach Anspruch 1, **dadurch gekennzeichnet, dass** die Montageöffnungen (18) auf einem gemeinsamen ersten Teilkreis angeordnet sind, und dass auf einem zweiten, zu dem ersten Teilkreis koaxialen Teilkreis Löcher (26) oder Gewindebohrungen zur Befestigung des Fahrzeugrades an der Radnabe (10) angeordnet sind.

5. Radnabe nach Anspruch 4, **dadurch gekennzeichnet, dass** die Zahl der der Radbefestigung dienenden Löcher (26) oder Gewindebohrungen größer ist als die Zahl der Montageöffnungen (18).

6. Radnabe nach Anspruch 1, **dadurch gekennzeichnet, dass** der Radfelgensteg (25) die Montageöffnungen (18) freilässt und nicht überdeckt, so dass Kühlluft durch die Montageöffnungen (18) hindurchtreten kann.

7. Radnabe nach Anspruch 1, **gekennzeichnet durch** einen fahrzeuginnenseitig an der Innenseite (13) des Nabengrundkörpers (11) angeordneten Vorsprung (61), welcher sich über die Wälzlageraufnahme (5A, 5B) hinaus nach radial innen erstreckt.

8. Radlagerung für ein Fahrzeugrad (20), mit einer über mindestens ein zur Radlagerung gehörendes Wälzlager (4A, 4B) drehbar auf einem Achsschenkel (1) angeordneten Radnabe (10) mit einem Nabengrundkörper (11), der an seiner Innenseite (13) das Wälzlager (4A, 4B) aufnimmt und zwischen dessen Außenseite (14) und dem Felgenhorn (21) des Fahrzeugrades sich ein durch die Radnabe und/oder durch den Felgensteg (25) des Fahrzeugrades gebildeter Verbindungsbereich (17) erstreckt, wobei die Radnabe (10)
a) in einem weiter fahrzeuginnen angeordneten, ersten Befestigungsabschnitt (B1) mit einer Flanschfläche (15) versehen ist, gegen die die Bremsscheibe (30) einer Scheibenbremse lösbar befestigt ist, **dadurch gekennzeichnet, daß** die Radnabe (10)
b) im Abstand zu dem ersten Befestigungsabschnitt (B1) in einem axial weiter fahrzeugaußen angeordneten, zweiten Befestigungsabschnitt (B2) mit dem Fahrzeugrad (20) verbunden ist,
wobei die Bremsscheibe (30) mittels mehrerer über den Umfang .der Flanschfläche (15) verteilt angeordneter Befestigungsmittel (35) von fahrzeuginnen her an der Flanschfläche (15) befestigbar ist,
und wobei sich in dem Verbindungsbereich (17) in axialer Fluchtung zu dem jeweiligen Befestigungsmittel (35) jeweils eine Montageöffnung (18) befindet.

9. Radlagerung nach Anspruch 8, **dadurch gekennzeichnet, dass** die Radnabe (10) in dem zweiten Befestiguhgsäbschnitt (B2) mit einem Nabenflansch (12) versehen ist, an dem das Fahrzeugrad (20) mittels Schraubbolzen (24) befestigt ist, und dass sich die Montageöffnungen (18) im Bereich zwischen dem Nabengrundkörper (11) und dem Nabenflansch (12) befinden.

10. Radlagerung nach Anspruch 8 oder 9, **dadurch gekennzeichnet, dass** die Bremsscheibe - (30) an dem Nabengrundkörper (11) mittenzentriert ist und hierzu mit einer zylindrischen Innenkontur (34) wenigstens bereichsweise auf einer entsprechenden zylindrischen Außenkontur (37) der Radnabe (10) sitzt.

11. Radlagerung nach Anspruch 8, 9 oder 10, **dadurch gekennzeichnet, dass** die Bremsscheibe (30) als Scheibe mit einem Reibring aus zwei beabstandeten Reibflächen (31, 32), und einem sich nach innen zu dem Nabengrundkörper (11) hin erstreckenden Befestigungsbund (33) ausgebildet ist, und dass die axiale Dicke (d) des Befestigungsbundes (33) nicht größer ist, als die Dicke (D) des Reibrings.

12. Radlagerung nach einem der Ansprüche 8 bis 11, **dadurch gekennzeichnet, dass** die Befestigungsmittel Schraubverbindungen (35) sind, welche die Bremsscheibe (30) von fahrzeuginnen her gegen die Flanschfläche (15) heranziehen.

13. Radlagerung nach einem der Ansprüche 10 bis 12, **dadurch gekennzeichnet, dass** das zentrale Schraubelement (41) der Schraubverbindungen (35) einen Schaftdurchmesser aufweist, der geringer als der jeweilige Lochdurchmesser an der Flanschfläche (15) ist, sodass das Schraubelement (41) bei Mittenzentrierung der Bremsscheibe (30) auf dem Nabengrundkörper (11) kontaktfrei das jeweilige Loch durchdringt.

14. Radlagerung nach Anspruch 12 oder 13, **dadurch gekennzeichnet, dass** die Schraubverbindung (35) bzw. das zentrale Schraubelement (41) eine Sollbruchstelle aufweist.

15. Radlagerung nach einem der Ansprüche 8 bis 14, **dadurch gekennzeichnet, dass** der Nabengrundkörper (11) auf seiner Außenseite (14) zwischen den beiden Befestigungsabschnitten (B2, B1) mit jeweils in axialer Fluchtung zu den Befestigungsmitteln (35) sich erstreckenden Führungsstrukturen (60) für ein Löse-/Befestigungswerkzeug. (W) versehen ist.

16. Radlagerung nach einem der Ansprüche 12 bis 15, **dadurch gekennzeichnet, dass** Bestandteil der Schraubverbindung (35) bremsscheibenseitig mindestens eine mit einem Innengewinde für das zentrale Schraubelement (41) versehene Gewindehülse (44) ist.

17. Radlagerung nach Anspruch 16, **dadurch gekennzeichnet, dass** die Gewindehülse (44) in die Bremsscheibe (30) eingegossen ist.

18. Radlagerung nach einem der vorangehenden Ansprüche 18 bis 17, **dadurch gekennzeichnet, dass** sich die Flanschfläche (15) an einem Nabenflansch (19) der Radnabe (10) befindet, und dass die Bremsscheibe (30) reib- und formschlüssig an dem Nabenflansch (19) befestigt ist, wobei der Formschluss mittelbar durch zwischen der Bremsscheibe (30) und dem Nabenflansch (19) angeordnete Formschlusselemente (42) erreicht wird.

19. Radlagerung nach Anspruch 18, **dadurch gekennzeichnet, dass** die Formschlusselemente (42) in die Bremsscheibe (30) eingegossen sind.

20. Radlagerung nach Anspruch 18 oder 19, **dadurch gekennzeichnet, dass** die Formschlusselemente (42) in radial sich erstreckenden Nuten (16) des Nabenflansches (19) eingreifen.

21. Radlagerung nach Anspruch 8, **gekennzeichnet durch** ein wärmeisolierendes Bauteil (50) zwischen der Flanschfläche (15) und der Bremsscheibe (30).

22. Radlagerung nach Anspruch 21, **dadurch gekennzeichnet, dass** sich das wärmeisolierende Bauteil (50) über den Innenrand (34) der Bremsscheibe (30) hinaus nach radial innen erstreckt und in diesem Bereich den Polring (51) eines Raddrehungssensors bildet.

## Claims

1. A wheel hub for fastening a vehicle wheel and a brake disc of a disc brake, with a main hub body (11) provided on its inner side (13) with a roller-bearing-receiving means (5A, 5B), wherein the wheel hub (10)
a) in a first fastening portion (B1) arranged further in the inside of the vehicle is provided with a flange face (15) against which the brake disc is capable of being fastened in a releasable manner,
b) at a distance from the first fastening portion (B1) is provided in a second fastening portion (B2) arranged axially further on the outside of the vehicle with a hub flange (12) for fastening the vehicle wheel,
wherein the brake disc is capable of being fastened from the inside of the vehicle to the flange face (15) by means of a plurality of fastening means (35) arranged distributed over the periphery of the flange face (15), **characterized in that** a mounting opening (18) is present in each case in the hub flange (12) in axial alignment with the respective fastening means (35).

2. A wheel hub according to Claim 1, **characterized in that** the flange face (15) is formed on a hub flange (19) which, facing the brake disc, is provided with grooves (16) extending radially.

3. A wheel hub according to Claim 1, **characterized in that** the main hub body (11) is provided on the outer side (14) thereof between the two fastening portions (B2, B1) with guide structures (60) extending in each case in axial alignment with the fastening means (35) for a release / fastening tool.

4. A wheel hub according to Claim 1, **characterized in that** the mounting openings (18) are arranged on a common first pitch circle, and holes (26) or threaded bores for fastening the vehicle wheel on the wheel hub (10) are arranged on a second pitch circle coaxial with the first pitch circle.

5. A wheel hub according to Claim 4, **characterized in that** the number of the holes (26) or threaded bores used for fastening the wheel is greater than the number of the mounting openings (18).

6. A wheel hub according to Claim 1, **characterized in that** the wheel rim web (25) releases and does not cover the mounting openings (18), so that cooling air can pass through the mounting openings (18).

7. A wheel hub according to Claim 1, **characterized by** a projection (61) which is arranged on the inner side (13) of the main hub body (11) on the inside of the vehicle and which extends radially inwards beyond the roller-bearing-receiving means (5A, 5B).

8. A wheel mounting for a vehicle wheel (20), with a wheel hub (10) arranged on a steering knuckle (1) so as to be rotatable by way of at least one roller bearing (4A, 4B) associated with the wheel mounting, with a main hub body (11) which receives the roller bearing (4A, 4B) on its inner side (13), and a connecting area (17) formed by the wheel hub and/or by the rim web (25) of the vehicle wheel extends between the outer side (14) of the roller bearing (4A, 4B) and the rim flange (21) of the vehicle wheel, wherein the wheel hub (10)
a) in a first fastening portion (B1) arranged further in the inside of the vehicle is provided with a flange face (15) against which the brake disc (30) of a disc brake is capable of being fastened in a releasable manner, **characterized in that** the wheel hub (10)
b) is connected to the vehicle wheel (20) at a distance from the first fastening portion (B1) in a second fastening portion (B2) arranged axially further on the outside of the vehicle,
wherein the brake disc (30) is capable of being fastened from the inside of the vehicle to the flange face (15) by means of a plurality of fastening means (35) arranged distributed over the periphery of the flange face (15),
and wherein a mounting opening (18) is present in each case in the connecting area (17) in axial alignment with the respective fastening means (35).

9. A wheel mounting according to Claim 8, **characterized in that** the wheel hub (10) in the second fastening portion (B2) is provided with a hub flange (12) to which the vehicle wheel (20) is fastened by means of threaded bolts (24), and the mounting openings (18) are present in the region between the main hub body (11) and the hub flange (12).

10. A wheel mounting according to Claim 8 or 9, **characterized in that** the brake disc (30) is centred on the main hub body (11) and, to this end, is mounted with a cylindrical internal contour (34) at least locally on a corresponding cylindrical external contour (37) of the wheel hub (10).

11. A wheel mounting according to Claim 8, 9 or 10, **characterized in that** the brake disc (30) is designed in the form of a disc with a friction ring comprising two friction faces (31, 32) arranged at a distance and a fastening collar (33) extending inwards towards the main hub body (11), and the axial thickness (d) of the fastening collar (33) is not larger than the thickness (D) of the friction ring.

12. A wheel mounting according to any one of Claims 8 to 11, **characterized in that** the fastening means are screw fastenings (35) which pull the brake disc (30) from the inside of the vehicle against the flange face (15).

13. A wheel mounting according to any one of Claims 10 to 12, **characterized in that** the central screw element (41) of the screw fastenings (35) has a shank diameter which is smaller than the respective hole diameter on the flange face (15), so that when the brake disc (30) is centred on the main hub body (11) the screw element (41) will pass through the respective hole without contact.

14. A wheel mounting according to Claim 12 or 13, **characterized in that** the screw fastening (35) or the central screw element (41) respectively has a pre-determined breaking point.

15. A wheel mounting according to any one of Claims 8 to 14, **characterized in that** the main hub body (11) is provided on the outer side (14) thereof between the two fastening portions (B2, B1) with guide structures (60) extending in axial alignment in each case with the fastening means (35) for a release / fastening tool (W).

16. A wheel mounting according to any one of Claims 12 to 15, **characterized in that** at least one threaded sleeve (44) provided with an internal thread for the central screw element (41) is a component part of the screw fastening (35) on the side towards the brake disc.

17. A wheel mounting according to Claim 16, **characterized in that** the threaded sleeve (44) is cast in the brake disc (30).

18. A wheel mounting according to any one of the preceding Claims 8 to 17, **characterized in that** the flange face (15) is present on a flange (19) of the wheel hub (10), and the brake disc (30) is fastened in a frictionally and positively locking manner to the hub flange (19), wherein the positive locking is achieved indirectly by positive locking elements (42) arranged between the brake disc (30) and the hub flange (19).

19. A wheel mounting according to Claim 18, **characterized in that** the positive locking elements (42) are cast in the brake disc (30).

20. A wheel mounting according to Claim 18 or 19, **characterized in that** the positive locking elements (42) engage in radially extending grooves (16) of the hub flange (19).

21. A wheel mounting according to Claim 8, **characterized by** a thermally insulating component (50) between the flange face (15) and the brake disc (30).

22. A wheel mounting according to Claim 21, **characterized in that** the thermally insulating component (50) extends radially inwards beyond the inner edge (34) of the brake disc (30) and forms the pole ring (51) of a wheel rotation sensor in this region.

## Revendications

1. Moyeu de roue pour la fixation d'une roue de véhicule et d'un disque de frein d'un frein à disque, comprenant un corps de base de moyeu (11) pourvu d'un logement de palier de roulement (5A, 5B) sur son côté intérieur (13), le moyeu de roue (10) :
a) étant pourvu, dans une première section de fixation (B1) située davantage vers l'intérieur du véhicule, d'une surface de bride (15) contre laquelle le disque de frein peut être fixé de façon démontable,
b) étant pourvu à distance de la première section de fixation (B1), dans une deuxième section de fixation (B2) située davantage vers l'extérieur du véhicule en direction axiale, d'une bride de moyeu (12) destinée à la fixation de la roue de véhicule,
le disque de frein pouvant être fixé sur la surface de bride (15) depuis l'intérieur du véhicule au moyen de plusieurs moyens de fixation (35) agencés de façon répartie sur le périmètre de la surface de bride (15), **caractérisé en ce qu'**une ouverture de montage (18) se trouve à chaque fois dans la bride de moyeu (12) dans un alignement axial par rapport au moyen de fixation respectif (35).

2. Moyeu de roue selon la revendication 1, **caractérisé en ce que** la surface de bride (15) est réalisée sur une bride de moyeu (19) qui est pourvue du côté dirigé vers le disque de frein de rainures (16) s'étendant radialement.

3. Moyeu de roue selon la revendication 1, **caractérisé en ce que** le corps de base du moyeu (11) est respectivement pourvu sur son côté extérieur (14), entre les deux sections de fixation (B2, B1), de structures de guidage (60) s'étendant dans un alignement axial par apport au moyens de fixation (35) pour un outil de démontage/de fixation.

4. Moyeu de roue selon la revendication 1, **caractérisé en ce que** les ouvertures de montage (18) sont agencées sur un premier cercle partiel commun et **en ce que** des trous (26) ou des perçages taraudés destinés à la fixation de la roue de véhicule sur le moyeu de roue (10) sont agencés sur un deuxième cercle partiel coaxial par rapport au premier cercle partiel.

5. Moyeu de roue selon la revendication 4, **caractérisé en ce que** le nombre des trous (26) ou perçages taraudés servant à la fixation de la roue est supérieur au nombre des ouvertures de montage (18).

6. Moyeu de roue selon la revendication 1, **caractérisé en ce que** la tige de jante de roue (25) laisse les ouvertures de montage (18) libres et ne les recouvre pas, de sorte que de l'air froid peut pénétrer au travers des ouvertures de montage (18).

7. Moyeu de roue selon la revendication 1, **caractérisé par** une saillie (61) agencée sur le côté intérieur (13) du corps de base du moyeu (11) du côté de l'intérieur du véhicule, qui s'étend radialement vers l'intérieur au-delà du logement de palier de roulement (5A, 5B).

8. Système de roulement de roue pour une roue de véhicule (20), comprenant un moyeu de roue (10) agencé de façon rotative sur une fusée d'essieu (1) par le biais d'au moins un palier de roulement (4A, 4B) appartenant au système de roulement de roue, ayant un corps de base de moyeu (11) qui reçoit le palier de roulement (4A, 4B) sur son côté intérieur (13), une zone de raccordement (17) formée par le moyeu de roue et/ou par la tige de jante (25) de la roue de véhicule s'étendant entre son côté extérieur (14) et le rebord de jante (21) de la roue de véhicule, le moyeu de roue (10) :
a) étant pourvu, dans une première section de fixation (B1) située davantage vers l'intérieur du véhicule, d'une surface de bride (15) contre laquelle le disque de frein (30) d'un frein à disque peut être fixé de façon démontable, **caractérisé en ce que** le moyeu de roue (10) :
b) est relié à distance de la première section de fixation (B1), dans une deuxième section de fixation (B2) située davantage vers l'extérieur du véhicule en direction axiale, à la roue de véhicule (20),
le disque de frein (30) pouvant être fixé sur la surface de bride (15) depuis l'intérieur du véhicule au moyen de plusieurs moyens de fixation (35) agencés de façon répartie sur le périmètre de la surface de bride (15),
et une ouverture de montage (18) se trouvant à chaque fois dans la zone de raccordement (17) dans un alignement axial par rapport au moyen de fixation respectif (35).

9. Système de roulement de roue selon la revendication 8, **caractérisé en ce que** le moyeu de roue (10) est pourvu, dans la deuxième section de fixation (B2), d'une bride de moyeu (12) sur laquelle la roue de véhicule (20) est fixée au moyen de boulons filetés (24) et **en ce que** les ouvertures de montage (18) se trouvent dans la zone comprise entre le corps de base du moyeu (11) et la bride de moyeu (12).

10. Système de roulement de roue selon la revendication 8 ou 9, **caractérisé en ce que** le disque de frein (30) est centré sur le corps de base du moyeu (11) et repose à cette fin avec un contour intérieur cylindrique (34) au moins dans une zone partielle sur un contour extérieur cylindrique (37) correspondant du moyeu de roue (10).

11. Système de roulement de roue selon la revendication 8, 9 ou 10, **caractérisé en ce que** le disque de frein (30) est réalisé comme disque avec une bague de friction à partir de deux surfaces de friction (31, 32) écartées l'une de l'autre et un bourrelet de fixation (33) s'étendant vers l'intérieur en direction du corps de base du moyeu (11) et **en ce que** l'épaisseur axiale (d) du bourrelet de fixation (33) n'est pas supérieure à l'épaisseur (D) de la bague de friction.

12. Système de roulement de roue selon l'une des revendications 8 à 11, **caractérisé en ce que** les moyens de fixation sont des raccords vissés (35) qui attirent le disque de frein (30) contre la surface de bride (15) depuis le côté intérieur du véhicule.

13. Système de roulement de roue selon l'une des revendications 10 à 12, **caractérisé en ce que** l'élément vissé central (41) des raccords vissés (35) présente un diamètre de tige qui est inférieur au diamètre de trou respectif sur la surface de bride (15), de telle sorte que lorsque le disque de frein (30) est centré sur le corps de base du moyeu (11), l'élément vissé (41) passe au travers du trou respectif sans contact.

14. Système de roulement de roue selon la revendication 12 ou 13, **caractérisé en ce que** le raccord vissé (35) ou l'élément vissé central (41) présente un point de rupture de consigne.

15. Système de roulement de roue selon l'une des revendications 8 à 14, **caractérisé en ce que** le corps de base du moyeu (11) est pourvu respectivement sur son côté extérieur (14), entre les deux sections de fixation (B2, B1), de structures de guidage (60) s'étendant dans un alignement axial vers le moyens de fixation (35) pour un outil de démontage/de fixation (W).

16. Système de roulement de roue selon l'une des revendications 12 à 15, **caractérisé en ce qu'**au moins un manchon fileté (44) pourvu d'un filetage intérieur pour l'élément vissé central (41) fait partie intégrante du raccord vissé (35) du côté du disque de frein.

17. Système de roulement de roue selon la revendication 16, **caractérisé en ce que** le manchon fileté (44) est intégré dans le disque de frein (30).

18. Système de roulement de roue selon l'une des revendications 8 à 17, **caractérisé en ce que** la surface de bride (15) se trouve sur une bride de moyeu (19) du moyeu de roue (10) et **en ce que** le disque de frein (30) est fixé sur la bride de moyeu (19) par friction et par ajustement de forme, l'ajustement de forme étant atteint indirectement au moyen d'éléments d'ajustement de forme (42) agencés entre le disque de frein( 30) et la bride de moyeu (19).

19. Système de roulement de roue selon la revendication 18, **caractérisé en ce que** les éléments d'ajustement de forme (42) sont intégrés dans le disque de frein (30).

20. Système de roulement de roue selon la revendication 18 ou 19, **caractérisé en ce que** les éléments d'ajustement de forme (42) viennent en prise dans des rainures (16) s'étendant radialement de la bride de moyeu (19).

21. Système de roulement de roue selon la revendication 8, **caractérisé par** un composant d'isolation thermique (50) entre la surface de bride (15) et le disque de frein (30).

22. Système de roulement de roue selon la revendication 21, **caractérisé en ce que** le composant d'isolation thermique (50) s'étend radialement vers l'intérieur au-delà du bord intérieur (34) du disque de frein (30) et forme dans cette zone la bague polaire (51) d'un capteur de rotation de roue.
